# EUROPÄISCHE PATENTSCHRIFT

(11) **EP 2 283 243 B1**
(45) Veröffentlichungstag und Bekanntmachung des Hinweises auf die Patenterteilung: **16.01.2019**
(21) Anmeldenummer: 09741750.5
(22) Anmeldetag: 30.04.2009
(51) Int. Cl.: F16C 33/44, F16C 33/56

(54) **KÄFIG FÜR WÄLZKÖRPER EINES LAGERS**
CAGE FOR THE ROLLING ELEMENTS OF A BEARING
CAGE POUR LES CORPS ROULANT DE PALIER À ROULEMENT

(30) Priorität: 06.05.2008 DE 102008022311
(43) Veröffentlichungstag der Anmeldung: 16.02.2011
(73) Patentinhaber: Schaeffler Technologies AG & Co. KG, 91074 Herzogenaurach (DE)
(72) Erfinder: BRAUN, Wolfgang, 97493 Garstadt (DE)
(86) Internationale Anmeldenummer: PCT/DE2009/000627
(87) Internationale Veröffentlichungsnummer: WO 2009/135477

(56) Entgegenhaltungen:
- WO-A2-2007/014729
- DE-A1-102008 002 840
- DE-U- 1 946 535
- JP-A- 2005 009 636
- US-A- 3 162 493
- US-A- 3 771 977
- US-A- 5 352 266
- US-A1- 2002 142 264
- US-A1- 2007 281 176

## Beschreibung

### Gebiet der Erfindung

Die Erfindung betrifft einen Käfig für Wälzkörper eines Lagers, insbesondere eines Wälzlagers.

Käfige unterliegen im Einsatz verschiedenen Belastungen, insbesondere mechanischer oder thermischer Art, sowie einem Verschleiß. Aus der Praxis sind Käfige aus Metall, speziell aus Messing oder Blech, bekannt. Metallkäfige, insbesondere spanend gefertigte Messingkäfige, weisen ein hohes Gewicht auf und sind teuer in der Herstellung. Aus der Praxis sind ebenfalls Käfige bekannt, die aus einem Kunststoff bestehen. Derartige Kunststoff-Käfige lassen sich günstig und schnell in großer Anzahl herstellen, beispielsweise durch Spritzgießen, wobei auch komplexe Geometrien möglich sind. Allerdings sind Kunststoffe speziell bei hohen Temperaturen nicht formbeständig.

DE 1 946 535 U beschreibt einen Käfig für ein Wälzlager, wobei der Käfig ein Grundkorpus aus einem Kunststoff aufweist und das Grundkorpus durch eine metallische Beschichtung, insbesondere aus Aluminium, vollständig bedeckt ist, wobei die Beschichtung durch Hochvakuum-Bedampfen oder auf galvanischem Weg aufgebracht worden ist. Eine derartige, insbesondere auf galvanischem Weg aufgebrachte, Beschichtung weist ein Gefüge mit mikrokristalliner Körnung auf, also aus Körnern, deren mittlere Abmessungen typischerweise im Bereich einiger µm liegen.

JP 2005 009 636 beschreibt einen Käfig für ein Wälzlager, wobei der Käfig ein Grundkorpus aus einem Kunststoff aufweist und das Grundkorpus durch eine wasserbeständige Beschichtung aus Aluminium vollständig bedeckt ist. Die Beschichtung aus Aluminium mit einer Dicke zwischen 8 nm und 200 nm, vorzugsweise zwischen 50 nm und 100 nm, wird mittels Abscheidung aus der Gasphase aufgebracht.

DE 10 2006 010 171 A1 beschreibt einen Käfig aus einem zweiseitigen Band, dessen eine Seite ein Metall und dessen andere Seite von einem verschleiß- und korrosionsfesten Kunststoff gebildet ist. Die Kunststoffschicht des Bandes weist dabei nach außen, insbesondere zu den Wälzkörpern bzw. zu den Laufringen.

JP 2006083965 A (Abstract) beschreibt einen Käfig, dessen Grundkorpus aus einem synthetischen Harz besteht, speziell aus einem Phenolharz oder einem PEEK-Harz, in dem Kohlenstoff-Nanopartikel, speziell Kohlenstoff-Nanoröhrchen oder -Nanofasern, gleichmäßig eingelagert sind.

JP 2006300257 A (Abstract) beschreibt einen Käfig, dessen Grundkorpus aus einer Harzverbindung besteht, in welche Kohlenstoff-Nanoröhrchen aufgenommen sind.

DE 10 2005 051 914 A1 beschreibt einen Käfig, in dessen Grundkorpus aus Polyamid Siliziumdioxid-Teilchen eingefügt sind, die eine Partikelgröße zwischen 1 nm und 50 nm aufweisen. Diese Partikel versteifen zwar das Grundkorpus des Käfigs, machen diesen jedoch auch spröde.

JP 2005024025 A (Abstract) beschreibt ein Wälzlager, wobei zumindest eines der Elemente (drehende und feststehende Lagerringe sowie Wälzkörper) ein Grundkorpus aus Siliziumkarbid aufweist, auf dem eine Beschichtung aus Kohlenstoff-Nanoröhrchen angeordnet ist.

JP 2004308877 A (Abstract) beschreibt einen Käfig für ein Wälzlager, dessen Grundkorpus aus einer ein synthetisches Harz enthaltenden Harzverbindung hergestellt ist, die Kohlenstoff-Nanoröhrchen mit einem Anteil von 1 bis 50 Gewichts-Prozent enthält.

WO 2004/090361 A1 schlägt vor, die Wälzkörper eines Lagers mit einem Nanocomposite-Material zu beschichten.

JP 2007177842 A (Abstract) beschreibt einen Käfig, dessen Korpus im Bereich der Kontaktflächen mit einem 5 bis 500 µm dicken Beschichtung aus einem porösen Harz versehen ist, das mit einem Schmieröl gefüllt ist.

WO 2007/014729 A2 beschreibt einen Käfig mit einem Grundkörper und einer zweilagigen Beschichtung, wobei die untere Lage der Beschichtung aus Metallen wie Chrom, Molybdän, Aluminium, Titan oder Wolfram besteht und die äußere Lage der Beschichtung fulleren-artiges Kohlenstoff-Nitrid (FL-CNx) umfasst oder daraus besteht.

US 6,994,475 B2 beschreibt einen Käfig für ein Wälzlager mit einem Grundkorpus aus Stahl, das mit einer vierlagigen Beschichtung mindestens im Bereich der Kontaktflächen bedeckt ist. Die erste, mit dem Grundkorpus verbundene Lage der Beschichtung besteht aus einem Metall wie Chrom, Titan oder Silizium mit einer Dicke von weniger als ca. 1 µm; die zweite Lage besteht aus einem verschleißfesten Material wie einem Nanocomposite, speziell Metallkarbiden mit Korngrößen von einigen nm; die dritte Lage aus einem Material wie Chromnitrid, und die vierte, äußere Lage der Beschichtung aus einem Festschmierstoff wie Bornitrid, Graphit oder PTFE mit einer Dicke von bis zu 5 µm.

WO 2006/066010 A2 beschreibt einen Sportartikel, speziell einen Schläger für eine Ballsportart, dessen Korpus abschnittsweise massiv aus einem Metall besteht, das ein Gefüge mit einer nanokristallinen Körnung aufweist.

US 2006/0135282 A1 beschreibt verschiedene Gegenstände aus einem leichten Material, speziell einem Polymer, die mit einer nanokristallinem Beschichtung aus einem Metall bedeckt sind. Bei den Gegenständen handelt es sich um einen Schaft eines Golfschlägers, ein Munitionsbehältnis, sowie Einzelteile eines Kraftfahrzeuges. Die Druckschrift verweist weiter auf ein Verfahren zur Beschichtung eines Grundkorpus aus einem Kunststoff mittels nasschemischer elektrosynthetischer Verfahren, teilweise auch durch Verweis auf die Druckschriften US 5,352,266 und US 5,433,797.

Weiter ist unter der Bezeichnung 'MetaFuse' ein Verfahren bekannt, Gegenstände mit einem Grundkorpus aus Kunststoff, insbesondere aus einem Thermoplasten, mittels eines elektrosynthetischen Verfahrens ohne Herstellung von Nanopartikeln mit einer das Grundkorpus vollständig umgebenden Beschichtung aus nanokristallinem Metall, insbesondere aus Nickel oder Eisen-Nickel-Legierung, zu versehen.

### Aufgabe der Erfindung

Es ist die Aufgabe der Erfindung, einen Käfig mit einem Grundkorpus aus Kunststoff zu versteifen und zugleich hinsichtlich seiner mechanischen Stabilität, seiner Verschleißfestigkeit und Korrosionsbeständigkeit zu verbessern.

### Zusammenfassung der Erfindung

Diese Aufgabe wird erfindungsgemäß durch einen Käfig nach dem Anspruch 1 gelöst.

Das mindestens abschnittsweise als Gefüge mit einer nanokristallinen Körnung ausgebildet Gefüge der metallischen Beschichtung des Käfigs weist hinsichtlich mechanischer Eigenschaften wie Zugfestigkeit und Verschleißfestigkeit im Vergleich zu einer Beschichtung mit einem Gefüge, dessen Körner mittlere Abmessungen von der Größenordnung einiger µm aufweisen, verbesserte Eigenschaften auf. Der Käfig wird damit deutlich fester, ohne spröder zu werden. Insbesondere ist das Gefüge mit der nanokristrallinen Körnung sehr homogen und dicht, so dass nur wenige und räumlich begrenzte Störungen auftreten, an denen äußere Kräfte bzw. aggressive Medien angreifen können.

Insgesamt lässt sich der Käfig leichtbauend ausgestalten, wobei das Grundkorpus aus Kunststoff aus einer Vielzahl bekannter Formgebungsverfahren ohne Materialabtrag schnell und preisgünstig hergestellt sein kann.

Erfindungsgemäß ist vorgesehen, dass die Beschichtung zumindest im Bereich der Kontaktflächen vorgesehen ist. Die Beschichtung kann sich beispielsweise auf den Bereich des Kontaktes zwischen dem Korpus des Käfigs und den Lagerringen bzw. den Wälzkörpern beschränken, so dass die verschleißverminderten Eigenschaften des Gefüges mit der nanokristallinen Körnung ausgenutzt werden. Aufgrund der besseren Wärmeleitfähgkeit des metallischen Beschichtung ist der Wärmeeintrag in das Korpus des Käfigs reduziert, so dass der Käfig insbesondere bei höheren Drehzahlen vorgesehen sein kann. Die Beschichtung, auch wenn diese nur abschnittsweise vorgesehen ist, stabilisiert das Grundkorpus des Käfigs mindestens teilweise.

Vorzugsweise ist vorgesehen, dass die Beschichtung das Grundkorpus oder das Substrat vollständig überdeckt, so dass die Beschichtung das Korpus des Käfigs insgesamt als mechanisch stabilisierende Hülle umgibt. Insoweit die Beschichtung im Kontaktbereich des Käfigs vorgesehen ist, kommt es zu einer Verschleißreduzierung.

Als Material für den Käfig können Kunststoffe vorgesehen werden, die als solche in der speziellen Anwendung aufgrund ihrer geringen Festigkeit bzw. Medienbeständigkeit alleine als Käfigmaterial ausscheiden. Konkret können die zur Zeit eingesetzten Kunststoffe durch preisgünstigere Kunststoffe ersetzt werden, so dass sich das Spektrum der als Material für das Grundkorpus in Frage kommenden Materialien erweitert.

Aufgrund der verbesserten metallischen Leitfähigkeit des Gefüges mit der nanokristallinen Körnung können Käfige bei höheren Temperaturen zum Einsatz kommen.

Vorzugsweise ist vorgesehen, dass die Beschichtung eine Dicke von weniger als 300 µm aufweist. Eine Beschichtung mit einer Dicke von weniger als 300 µm ist ausreichend, um als das Grundkorpus vollständig umgebende Umhüllung eine ausreichende Eigensteifigkeit und Stabilität aufzuweisen. Auch wenn die Beschichtung das Grundkorpus nicht vollständig umgibt, sondern nur abschnittsweise abdeckt, kann eine mechanische Stabilisierung des Käfigs erreicht werden. Weiter sind konstruktive Anpassungen für den beschichteten Käfig im Vergleich zu dem unbeschichteten Käfig noch nicht erforderlich.

Erfindungsgemäß ist vorgesehen, dass die Körner der nanokristallinen Körnung des Gefüges eine maximale Abmessung von weniger als 100 nm aufweisen. Besonders bevorzugt weisen die Körner maximale Abmessungen von 10 nm oder einigen Dutzend nm auf. Derartige Körner bieten ein dichtes Gefüge mit im Vergleich zu größeren Körnern mit mittleren Abmessungen von einigen Mikrometern verbesserten mechanischen und chemischen Eigenschaften.

Vorzugsweise ist vorgesehen, dass das Metall eine Eisenlegierung oder eine Legierung auf Basis von Titan oder Nickel ist. Für die genannten Metalllegierungen ist bekannt, dass diese auf elektrosynthetischen Weg schnell und einfach als Gefüge mit einer nanokristallinen Körnung abscheidbar sind.

Vorzugsweise ist vorgesehen, dass der Kunststoff ein Thermoplast ist. Thermoplasten sind aufgrund ihrer geringen mechanischen Stabilität bei Temperaturen von ca. 130 °C als Material für einen Käfig wenig geeignet, allerdings ermöglicht die das Grundkorpus umgebende, eine Eigenstabilität aufweisende Beschichtung aus dem das Gefüge mit der nanokristallinen Körnung aufweisende Metall als im wesentlichen selbsttragende, mit dem Grundkorpus verbundene Hülle eine ausreichende Festigkeit des Käfigs auch bei höheren Temperaturen. Speziell können Thermoplasten als Material für das Grundkorpus vorgesehen sein, die ohne Beschichtung als Material für den Käfig aufgrund der nicht ausreichenden Formbeständigkeit bei höheren Temperaturen nicht geeignet wären. Weiter können Käfige mit einem Grundkorpus aus einem Thermoplasten bei höheren Temperaturen zum Einsatz kommen.

Vorzugsweise ist vorgesehen, dass die Beschichtung nach einem elektrochemischen Verfahren auf das Grundkorpus aufgebracht worden ist. Im Verlauf des Verfahrens werden keine Nanopartikel hergestellt, so dass eine möglicht Gefährdung der Umwelt durch die Nanopartikel ausgeschlossen werden kann.

Weitere Vorteile und Merkmale der Erfindung ergeben sich aus den abhängigen Ansprüchen sowie aus der Beschreibung von bevorzugten Ausführungsbeispielen.

Die Erfindung wird im folgenden anhand von Ausführungsbeispielen näher beschrieben und erläutert.

### Kurze Beschreibung der Zeichnungen

- Fig. 1: zeigt ausschnittsweise eine perspektivische Ansicht eines ersten Ausführungsbeispiels eines erfindungsgemäßen Käfigs, und
- Fig. 2: zeigt ausschnittsweise eine perspektivische Ansicht eines zweiten Ausführungsbeispiels eines erfindungsgemäßen Käfigs.

### Detaillierte Beschreibung der Zeichnung

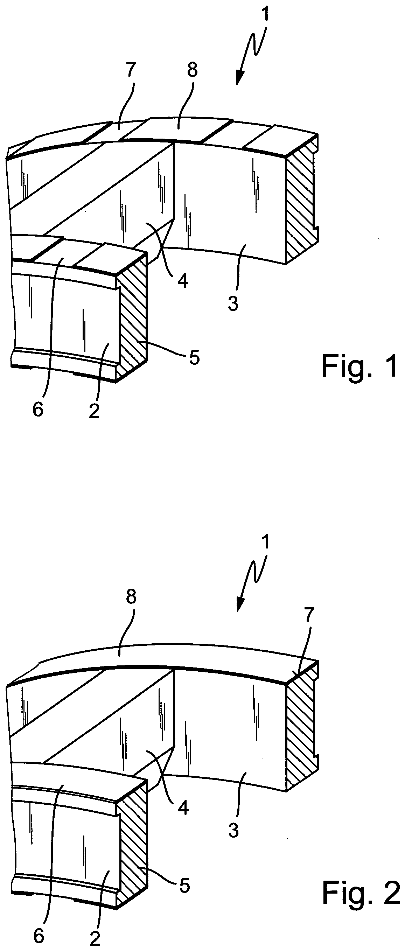

Fig. 1 zeigt einen Ausschnitt aus einem Käfig 1 für ein Wälzlager, der einen ersten Ring 2 und einen zweiten Ring 3 sowie die beiden Ringe 2, 3 verbindende Stege 4 umfasst.

Das Grundkorpus 5 des Käfigs 1 ist einteilig als Spritzgussteil aus einem Kunststoff ausgebildet. Die erste Seitenfläche 6 des ersten Rings 2 und die erste Seitenfläche 7 des zweiten Rings 3 ist jeweils als Kontaktfläche des Käfigs 1 mit einem Laufring des nicht näher dargestellten Wälzlagers ausgebildet.

Im Bereich der beiden Kontaktflächen 6, 7 ist jeweils eine Beschichtung 8 vorgesehen, die in Umfangsrichtung der beiden Ringe 2, 3 nur abschnittsweise ausgebildet ist und in axialer Richtung die beiden Kanten der beiden Seitenflächen der beiden Ringe 2, 3 verbindet. Die Beschichtung 8 ist aus einem Metall, speziell einer Nickellegierung, mit einem Gefüge mit einer nanokristallinen Körnung ausgebildet, das mit einer Höhe von ca. 300 µm über den angrenzenden, nicht-beschichteten Bereich der jeweiligen Seitenfläche 6, 7 übersteht. Ein Kontakt zwischen den beiden Ringen 2, 3 und der Lagerring des Wälzlagers tritt dabei nicht mehr entlang der gesamten Seitenfläche 6, 7 auf, sondern nur noch im Bereich der Beschichtung 8, wo die verschleißmindernden Eigenschaften des Gefüges mit der nanokristallinen Körnung wirksam werden.

Die Beschichtung 8 umgibt das Grundkorpus 5 des Käfigs 1 nur abschnittsweise, nach Art eines Stützrings. Damit wird das Grundkorpus 5 und dadurch der Käfig 1 insgesamt mechanisch stabilisiert.

Die Beschichtung 8 selbst ist durch ein elektrochemisches Verfahren auf das Grundkorpus 5 aufgebracht worden, dabei waren die Abschnitte der Oberfläche des Grundkorpus 5, die die Beschichtung 8 nicht erhalten sollten, zuvor abgedeckt worden.

Fig. 2 zeigt einen Käfig 1 mit einem Grundkorpus 5 aus einem Kunststoff, auf dessen Kontaktflächen 6, 7 der beiden Seitenringe 2, 3 eine Beschichtung 8 aus einer Nickellegierung mit Gefüge mit der nanokristallinen Körnung so aufgebracht ist, dass die jeweilige Beschichtung 8 den Seitenring 2, 3 im Bereich der Kontaktfläche 6, 7 vollständig umläuft.

Bei den beiden vorstehend beschriebenen Ausführungsbeispielen war die Beschichtung 8 jeweils durch ein elektrochemisches Verfahren aufgebracht worden. Es versteht sich, dass die nanokristalline Körnung des Gefüges der Beschichtung 8 auch durch andere Verfahren, speziell Abscheidungen aus der Gasphase (CVD, PVD) oder durch Sputtern aufgebracht sein kann.

Die jeweilige Beschichtung 8 muss nicht zwingend unmittelbar auf der Oberfläche 8 des Grundkorpus 5 angeordnet sein; es kann beispielsweise vorgesehen sein, dass die Beschichtung 8 auf ein Substrat aufgebracht wird, das dann wiederum als dünner Film auf die Oberfläche des Grundkorpus 5 aufgeklebt wird. Das die Beschichtung 8 aufweisende Substrat kann dabei unabhängig von dem Grundkorpus 5 hergestellt und nachträglich, beispielsweise nur bei Bedarf, aufgetragen werden.

Bei den beiden vorstehend beschriebenen Ausführungsbeispielen bedeckte die Beschichtung 8 das Grundkorpus 5 nur abschnittsweise im Bereich der Kontaktflächen 6, 7 der beiden Ringe 2, 3. Es versteht sich, dass die Beschichtung 8 auch im Bereich der Taschen, die die Wälzkörper aufnehmen, vorgesehen sein kann. Es versteht sich weiter, dass die Beschichtung 8 auch die gesamte Oberfläche des Grundkorpus 5 abdeckend ausgebildet sein kann. In letzterem Fall vermittelt die Beschichtung 8 dem Käfig 1 eine deutlich verbesserte mechanische Stabilität.

Bei dem vorstehend beschriebenen ersten Ausführungsbeispiel war die Beschichtung 8 durch abschnittsweise ausgebildete, in Draufsicht im wesentlichen rechteckige Abschnitte ausgebildet, die über angrenzende, nicht-beschichtete Abschnitte überstehen. Es versteht sich, dass die beschichteten Abschnitte auch eine von der Rechteckform abweichende Gestalt aufweisen können; beispielsweise können die beschichteten Abschnitte so ausgebildet bzw. angeordnet sein, dass eine Förderwirkung für Schmiermittel in Richtung auf die Wälzkörper entsteht. In Draufsicht auf die Seitenflächen 6, 7 der Seitenringe 2, 3 wäre das beispielsweise der Fall, wenn die beschichteten Abschnitte trapezförmig ausgestaltet sind oder ein Fischgrätmuster aufweisen. Zumindest mittelbar trägt dabei die Beschichtung 8 auch zur Reibungsminderung bei.

### Bezugszeichenliste

- 1: Käfig
- 2: erster Ring
- 3: zweiter Ring
- 4: Steg
- 5: Grundkorpus
- 6: erste Seitenfläche des ersten Rings
- 7: erste Seitenfläche des zweiten Rings
- 8: Beschichtung

## Patentansprüche

1. Käfig (1) für Wälzkörper eines Lagers, umfassend
ein Grundkorpus (5) aus Kunststoff, und eine an dem Grundkorpus (5) befestigte Beschichtung (8) aus Metall, die das Grundkorpus (5) mindestens abschnittsweise überdeckt, wobei das Metall ein Gefüge mit einer nanokristallinen Körnung aufweist, wobei die nanokristallinen Körner des Gefüges eine maximale Abmessung von weniger als 100 nm aufweisen, wobei
die Beschichtung (8) aus Metall unmittelbar auf das Grundkorpus (5) aufgebracht ist oder die Beschichtung (8) aus Metall auf ein Substrat aufgebracht ist und das Substrat inklusive der Beschichtung (8) als dünner Film auf das Grundkorpus (5) aufgeklebt ist, und wobei die Beschichtung (8) zumindest im Bereich von Kontaktflächen (6, 7) des Käfigs (1), in welchen der Käfig (1) in Kontakt zu Lagerringen oder Wälzkörpern des Lagers gelangt, vorgesehen ist.

2. Käfig nach Anspruch 1, wobei die Beschichtung (8) das Grundkorpus (5) oder das Substrat vollständig überdeckt.

3. Käfig nach einem der Ansprüche 1 oder 2, wobei die Beschichtung (8) eine Dicke von weniger als 300 µm aufweist.

4. Käfig nach einem der Ansprüche 1 bis 3, wobei
die nanokristallinen Körner des Gefüges eine maximale Abmessung von 10 nm aufweisen.

5. Käfig nach einem der Ansprüche 1 bis 4, wobei
das Metall eine Eisenlegierung oder eine Legierung auf Basis von Titan oder Nickel ist.

6. Käfig nach einem der Ansprüche 1 bis 5, wobei
der Kunststoff ein Thermoplast ist.

7. Käfig nach einem der Ansprüche 1 bis 6, wobei
die Beschichtung (8) nach einem elektrochemischen Verfahren auf das Grundkorpus (5) oder das Substrat aufgebracht ist.

8. Käfig nach einem der Ansprüche 1 bis 6, wobei
die Beschichtung (8) mittels Abscheidung aus der Gasphase oder durch Sputtern auf das Grundkorpus (5) oder das Substrat aufgebracht ist.

9. Lager umfassend Lagerringe und Wälzkörper sowie einen Käfig (1) nach einem der Ansprüche 1 bis 8 zur Aufnahme der Wälzkörper.

## Claims

1. Cage (1) for rolling elements of a bearing, comprising a main body (5) composed of plastic and a coating (8) composed of metal, fixed to the main body (5) and covering the main body (5) at least in sections, wherein the metal has a structure with a nanocrystalline grain size wherein the nanocrystalline grains of the structure have a maximum dimension of less than 100 nm, wherein
the coating (8) composed of metal is applied directly to the main body (5) or the coating (8) composed of metal is applied to a substrate and the substrate including the coating (8) is adhesively bonded as a thin film to the main body (5), and wherein the coating (8) is provided at least in the region of contact surfaces (6, 7) of the cage (1), in which the cage (1) comes into contact with bearing rings or rolling elements of the bearing.

2. Cage according to Claim 1, wherein the coating (8) covers the main body (5) or the substrate completely.

3. Cage according to either of Claims 1 and 2, wherein the coating (8) has a thickness of less than 300 µm.

4. Cage according to one of Claims 1 to 3, wherein the nanocrystalline grains of the structure have a maximum dimension of 10 nm.

5. Cage according to one of Claims 1 to 4, wherein the metal is an iron alloy or an alloy based on titanium or nickel.

6. Cage according to one of Claims 1 to 5, wherein the plastic is a thermoplastic.

7. Cage according to one of Claims 1 to 6, wherein the coating (8) has been applied to the main body (5) or the substrate by an electrochemical method.

8. Cage according to one of Claims 1 to 6, wherein the coating (8) has been applied to the main body (5) or the substrate by means of deposition from the gas phase or by sputtering.

9. Bearing comprising bearing rings and rolling elements and a cage (1) according to one of Claims 1 to 8 for holding the rolling elements.

## Revendications

1. Cage (1) pour les éléments roulants d'un palier, comprenant un corps de base (5) en matière plastique, et un revêtement (8) en métal fixé au corps de base (5), qui recouvre au moins localement le corps de base (5), dans laquelle le métal présente une structure avec une granulométrie nanocristalline, dans lequel les grains nanocristallins de la structure présentent une dimension maximale de moins de 100 nm, dans laquelle le revêtement (8) en métal est déposé directement sur le corps de base (5), ou le revêtement (8) en métal est déposé sur un substrat et le substrat y compris le revêtement (8) est collé sous forme de film mince sur le corps de base (5), et dans laquelle le revêtement (8) est prévu au moins dans la région de faces de contact (6, 7) de la cage (1), dans lesquelles la cage (1) vient en contact avec des bagues de palier ou des éléments roulants du palier.

2. Cage selon la revendication 1, dans laquelle le revêtement (8) recouvre entièrement le corps de base (5) ou le substrat.

3. Cage selon une des revendications 1 ou 2, dans laquelle le revêtement (8) présente une épaisseur de moins de 300 µm.

4. Cage selon l'une quelconque des revendications 1 à 3, dans laquelle les grains nanocristallins de la structure présentent une dimension maximale de 10 nm.

5. Cage selon l'une quelconque des revendications 1 à 4, dans laquelle le métal est un alliage de fer ou un alliage à base de titane ou de nickel.

6. Cage selon l'une quelconque des revendications 1 à 5, dans laquelle la matière plastique est un thermoplastique.

7. Cage selon l'une quelconque des revendications 1 à 6, dans laquelle le revêtement (8) est déposé sur le corps de base (5) ou le substrat par un procédé électrochimique.

8. Cage selon l'une quelconque des revendications 1 à 6, dans laquelle le revêtement (8) est déposé sur le corps de base (5) ou le substrat par dépôt en phase gazeuse ou par pulvérisation cathodique.

9. Palier comprenant des bagues de palier et des éléments roulants ainsi qu'une cage (1) selon l'une quelconque des revendications 1 à 8 destinée à recevoir les éléments roulants.
